(19) Europäisches Patentamt
European Patent Office
Office européen des brevets

(11) **EP 3 424 138 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **17701285.3**

(22) Anmeldetag: **16.01.2017**

(51) Int Cl.:
**H02M 3/157** (2006.01)     **H02M 1/00** (2006.01)

(86) Internationale Anmeldenummer:
**PCT/EP2017/050753**

(87) Internationale Veröffentlichungsnummer:
**WO 2017/148605 (08.09.2017 Gazette 2017/36)**

(54) **VERFAHREN ZUR OPTIMIERUNG DES BETRIEBS EINES IN EINEM REGELKREIS FÜR EINEN AUFWÄRTSWANDLER VORGESEHENEN DIGITALEN REGLERS SOWIE EIN REGELKREIS UND EIN COMPUTERPROGRAMMPRODUKT**

METHOD FOR OPTIMIZING THE OPERATION OF A DIGITAL CONTROLLER PROVIDED IN A CONTROL LOOP FOR A BOOST CONVERTER, AND A CONTROL LOOP AND A COMPUTER PROGRAM PRODUCT

PROCÉDÉ D'OPTIMISATION DU FONCTIONNEMENT D'UN RÉGULATEUR NUMÉRIQUE PRÉVU DANS UN CIRCUIT DE RÉGULATION D'UN CONVERTISSEUR ÉLÉVATEUR, CIRCUIT DE RÉGULATION ET PRODUIT PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2016 DE 102016203366**

(43) Veröffentlichungstag der Anmeldung:
**09.01.2019 Patentblatt 2019/02**

(73) Patentinhaber: **Robert Bosch GmbH**
**70442 Stuttgart (DE)**

(72) Erfinder:
• **QUENZER-HOHMUTH, Samuel**
**72766 Reutlingen (DE)**
• **RITZMANN, Steffen**
**72770 Reutlingen (DE)**
• **ROSAHL, Thoralf**
**72800 Eningen (DE)**
• **WICHT, Bernhard**
**72770 Reutlingen (DE)**

(56) Entgegenhaltungen:
**US-A1- 2009 079 401     US-A1- 2010 237 836**
**US-A1- 2014 009 132     US-A1- 2014 266 084**
**US-A1- 2015 091 544**

• **SIRA-RAMIREZ H ET AL: "An algebraic parameter estimation approach to the adaptive observer-controller based regulation of the boost converter", INDUSTRIAL ELECTRONICS, 2007. ISIE 2007. IEEE INTERNATIONAL SYMPOSIUM ON, IEEE, PI, 1. Juni 2007 (2007-06-01), Seiten 3367-3372, XP031156693, ISBN: 978-1-4244-0754-5**

**Beschreibung**

Die vorliegende Erfindung betrifft ein Verfahren zur Optimierung des Betriebs eines in einem Regelkreis für einen Aufwärtswandler vorgesehenen digitalen Reglers, welches die folgenden Verfahrensschritte umfasst: Auswerten mindestens einer Ausgangsgröße des digitalen Reglers im Betrieb des Aufwärtswandlers. Schätzen des instantanen Lastwiderstandswertes in der Strecke des Regelkreises anhand der mindestens einen ausgewerteten Ausgangsgröße sowie das Einstellen mindestens eines Reglerkoeffizienten des digitalen Reglers anhand des geschätzten instantanen Lastwiderstandswertes im Betrieb des Aufwärtswandlers.

Stand der Technik

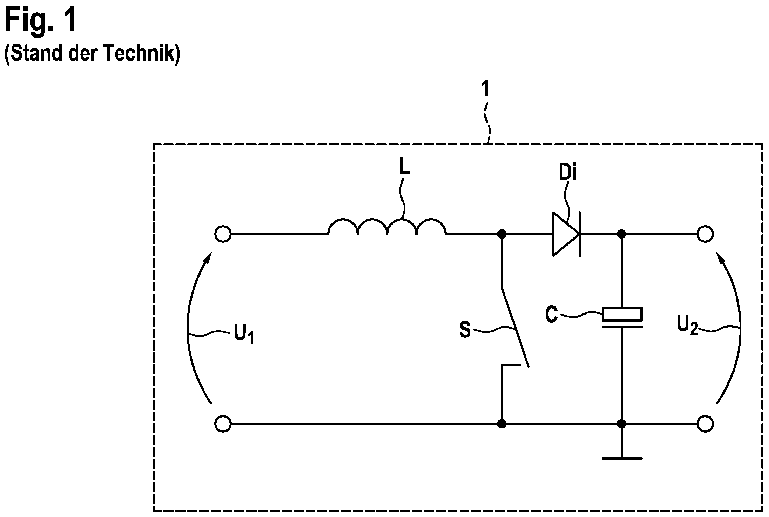

Aufwärtswandler, welche auch als Hochsetzsteller, step-up-converter oder als boost-converter bezeichnet werden, wandeln eine Eingangsspannung $U_1$ in eine höhere Ausgangsspannung $U_2$. Sie kommen in vielen batteriegespeisten Geräten zum Einsatz, in welchen die Elektronik eine gegenüber der Batteriespannung höhere Spannung benötigt, so beispielsweise in Notebooks, Mobiltelefonen oder diversen Haushaltsgeräten. Ein Aufwärtswandler des Standes der Technik ist in Figur 1 gezeigt. Der dort gezeigte Aufwärtswandler 1 weist eine Induktivität L, eine Diode Di, eine Kapazität C und ein Schaltmittel S auf, welches in einem vorbestimmten Takt angesteuert wird.

Aufwärtswandler sind regelmäßig in einem Regelkreis verschaltet, in und von welchem der Betrieb des Aufwärtswandlers gesteuert wird. Wesentliches Element innerhalb dieser Regelkreise sind heutzutage sogenannte digitale Regler, mittels derer sich der Betrieb des Aufwärtswandlers im Regelkreis genau einstellen und regeln lässt. Zur Auslegung des Regelkreises für einen Aufwärtswandler wird die Strecke des Regelkreises modelliert. Dabei hängt die im Rahmen der Modellierung zu bestimmende sogenannte Streckenübertragungsfunktion eines Aufwärtswandlers von verschiedenen Parametern des Regelkreises ab. Zu diesen Parametern zählen unter anderem beispielsweise der Lastwiderstand, der in der Strecke des Regelkreises von dem Aufwärtswandler gespeist wird, die Ausgangs- und Eingangsspannung sowie die LC-Filter-Werte des Ausgangswandlers. Mithin ergeben sich für verschiedene Parameterwerte verschiedene Streckenübertragungsfunktionen und für diese verschiedenen Streckenübertragungsfunktionen verschiedene optimale Konfigurationen der oben erwähnten Regler. Jede Reglerkonfiguration ergibt sich dabei aus der bestimmten Einstellung verschiedener Koeffizienten des Reglers, sodass sich zwei verschiedene Reglerkonfigurationen in der unterschiedlichen Einstellung mindestens eines Reglerkoeffizienten voneinander unterscheiden.

Von allen (oben genannten) Parametern, deren Änderung sich auf die Streckenübertragungsfunktion eines Regelkreises auszuwirken vermag, haben Änderungen im Lastwiderstand mit die größten Auswirkungen auf die Streckenübertragungsfunktion des Regelkreises eines Aufwärtswandlers. Die Streckenübertragungsfunktion eines Aufwärtswandlers weist eine sogenannte Rechte-Halbebene-Nullstelle (RHPZ, Right-Half-Plane-Zero) im Pol-Nullstellen-Diagramm auf, welche sich stabilitätsgefährdend auf den Regelkreis des Aufwärtswandlers auswirkt. Aus diesem Grund wird die Transitfrequenz $f_T$ des Regelkreises zur Regelung von Aufwärtswandlern im Stand der Technik deutlich unterhalb der der Rechte-Halbebene-Nullstelle zuordenbaren Frequenz gewählt. Die einer Rechte-Halbebene-Nullstelle zuordenbare Frequenz wandert jedoch mit steigendem Lastwiderstand zu höheren Frequenzen, was es erlauben würde, die Transitfrequenz $f_T$ des Regelkreises bei größeren Lastwiderständen höher zu wählen als bei kleineren Lastwiderständen, wodurch sich ein schnellerer Regelkreis realisieren ließe.

In den Regelkreisen für Aufwärtswandler des Standes der Technik wird jedoch regelmäßig eine einzige, weitgehend unveränderliche Reglerkonfiguration gewählt und damit einhergehend eine Transitfrequenz $f_T$ festgelegt, die auch bei einer Veränderung der Lastsituation in der Strecke des Regelkreises konstant bleibt. Die im Regler durch eine entsprechende Wahl der Reglerkoeffizienten voreingestellte, invariable Transitfrequenz $f_T$ wird konkret so gewählt, dass eine Worst-Case-Bedingung - das Vorliegen des kleinstmöglichen Lastwiderstandes $R_L$ in der Strecke des Regelkreises - stets abgedeckt ist. Dieses Vorgehen bringt jedoch mit sich, dass die Transitfrequenz $f_T$ unabhängig vom Lastwiderstand $R_L$ konstant niedrig und der Regelkreis daher generell langsam ist.

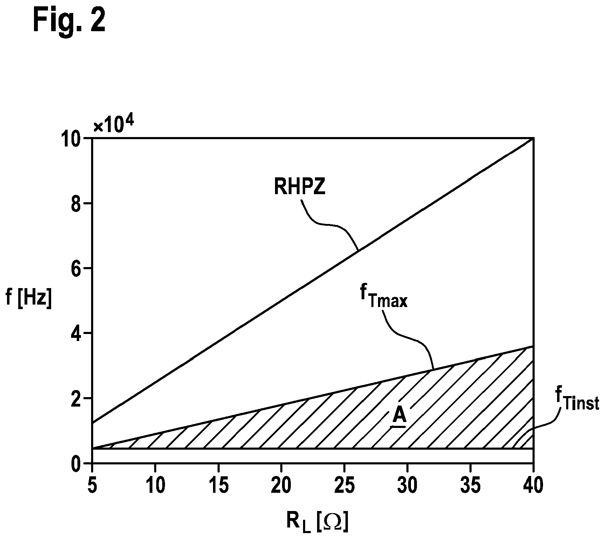

In Figur 2 ist dieser Zusammenhang anschaulich dargestellt. Konkret zeigt die Figur 2 ein Diagramm, in welchem die einer jeweiligen Rechte-Halbebene-Nullstelle RHPZ bei gegebenem Lastwiderstand $R_L$ im Regelkreis jeweils zuordenbare Frequenz sowie verschiedene Transitfrequenzen $f_{Tmax}$, $f_{Tinst}$ des Regelkreises eines Aufwärtswandlers in Hertz über dem Lastwiderstand $R_L$ der Strecke des Regelkreises in Ohm abgetragen sind. Die mit RHPZ bezeichnete Gerade in Figur 2 zeigt also die bei gegebenem Lastwiderstand $R_L$ einer Rechte-Halbebene-Nullstelle des Regelkreises jeweils zuordenbare Frequenz, welche mit steigendem Lastwiderstand $R_L$ in der Strecke des Regelkreises zunimmt. Die mit $f_{Tmax}$ gekennzeichnete Gerade zeigt die bei gegebenem Lastwiderstand $R_L$ maximal zulässige Transitfrequenz, bei welcher der Regelkreis zuverlässig und stabil im Optimum betrieben werden kann. Die mit $f_{Tinst}$ gekennzeichnete Konstante zeigt die gemäß des Standes der Technik im Regler voreingestellte, unveränderliche Tranistfrequenz, sodass die in Figur 2 grau hinterlegte Fläche A ein ungenutztes Potenzial des Regelkreises abbildet.

Die US 2014/0266084 A1 offenbart einen Gleichspannungswandler, der mindestens einen elektronischen Schalter aufweist.

Die US 2014/0009132 A1 offenbart ein System und ein Verfahren für die Regulierung eines Leistungswandler-Systems.

Der Artikel "Autotuning Techniques for Digitally-Controlled Point-of-Load Converters with Wide Range of Capacitive Loads", Applied Power Electronics Conference, APEC 2007, Seiten 14-20, XP031085186; offenbart ein Verfahren zum Betrieb eines Abwärtswandler mit PID-Regelung.

Der Artikel: "SIRA-RAMIREZ H ET AL: "An algebraic parameter estimation approach to the adaptive observer-controller based regulation of the boost converter", INDUSTRIAL ELECTRONICS, 2007. ISIE 2007. IEEE INTERNATIONAL SYMPOSIUM ON, IEEE, PI, 1. Juni 2007 (2007-06-01), Seiten 3367-3372, XP031156693, ISBN: 978-1-4244-0754-5; offenbart ein Verfahren zum Betrieb eines Aufwärtswandlers mit unbekannten, stückweise konstanten Lastwiderstandswerten unter der Einschränkung auf rauschreiche Ausgangsspannungsmessungen.

Die US 2015/091544 A1 beschreibt eine Steuerschaltung in einem PFM/PWM-Boost-Schaltregler, welche eine zeitgesteuerte PFM-Austrittssteuerschaltung beinhaltet, die konfiguriert ist, um ein erstes Steuersignal zum Steuern eines Hauptleistungsschalters, ein Nulldurchgangssignal, das einen Induktorstrom anzeigt, der den Wert von Nullstrom erreicht hat, und ein Timer-Referenzsignal, das eine Timerschwellwerdauer anzeigt, zu empfangen. Die zeitgesteuerte PFM-Austrittssteuerschaltung bewertet eine Leerlaufzeit des Induktorstroms basierend auf dem ersten Steuersignal und dem Nulldurchgangssignal. Die zeitgesteuerte PFM-Austrittssteuerschaltung setzt das PFM-Austrittssignal als Reaktion auf die unter einen Pegel fallende Leerlaufzeit, der gleich oder kleiner als die Timerschwellwertdauer ist, und der Boost-Schaltregler wechselt aus dem PFM-Modus in den PWM-Modus als Reaktion auf das PFM-Austrittssignal.

Offenbarung der Erfindung

Erfindungsgemäß wird ein Verfahren zur Optimierung des Betriebs eines in einem Regelkreis für einen Aufwärtswandler vorgesehenen digitalen Reglers zur Verfügung gestellt. Das Verfahren umfasst die folgenden Verfahrensschritte: Auswerten mindestens einer Ausgangsgröße des digitalen Reglers im Betrieb des Aufwärtswandlers. Schätzen des instantanen Lastwiderstandswertes in der Strecke des Regelkreises anhand der mindestens einen ausgewerteten Ausgangsgröße, wobei im Schritt des Schätzens der folgende Formelzusammenhang zur Schätzung des Lastwiderstandswertes verwandt wird:

$$R_L = \frac{U_{Aus}}{(1-D) * \left( \dfrac{ReglerAus - U_{Komp,ss} * D}{R_{Shunt}} - \dfrac{U_{Aus} * (1-D) * D * T_{SW}}{2 * L} \right)},$$

wobei $R_L$ der Wert des Lastwiderstands in der Strecke, $U_{Aus}$ der Wert der Ausgangsspannung des Regelkreises oder der Strecke, ReglerAus der Reglerausgangswert des Reglers, $U_{Komp,ss}$ der Wert der Spannung der Kompensationsrampe des Aufwärtswandlers von Spitze zu Spitze, D das Tastverhältnis des Reglers, $R_{Shunt}$ der Wert eines Shuntwiderstands zur Spulenstrommessung des Aufwärtswandlers, L der Wert der Induktivität des Aufwärtswandlers und $T_{sw}$ die Periodendauer des Reglers ist.

Einstellen beziehungsweise anpassen mindestens eines Reglerkoeffizienten des digitalen Reglers an die Position der Rechte-Halbebene-Nullstelle im Pol-Nullstellen-Diagramm, anhand des geschätzten instantanen Lastwiderstandswertes im Betrieb des Aufwärtswandlers. Erfindungsgemäß bedingt eine Veränderung in der Einstellung des mindestens einen Reglerkoeffizienten eine Veränderung der Transitfrequenz des Regelkreises.

Das erfindungsgemäße Verfahren ermöglicht die Anpassung der Transitfrequenz des Regelkreises an die aktuelle Lastsituation beziehungsweise an eine sich aus einer veränderten Lastsituation ergebende Verschiebung der Rechte-Halbebene-Nullstelle im Pol-Nullstellen-Diagramm mithilfe eines effizienten Schätzverfahrens für den Lastwiderstand. Dadurch kann ein deutlich schnellerer Regelkreis für einen Aufwärtswandler mit einem deutlich besseren Lastsprungverhalten bei großen Lastwiderständen realisiert werden. Im Unterschied zum Stand der Technik wird im Rahmen des erfindungsgemäßen Verfahrens anhand des Spulenstroms der Lastwiderstand geschätzt und werden die Ausgangsgrößen eines digitalen, nicht als analoge Komponente realisierten Reglers ausgewertet, was eine einfache Anpassung der Transitfrequenz des Regelkreises ermöglicht.

Erfindungsgemäß entspricht das Einstellen mindestens eines Reglerkoeffizienten des digitalen Reglers anhand des geschätzten instantanen Lastwiderstandswertes im Betrieb des Aufwärtswandlers einem Anpassen beziehungsweise einem Nachjustieren mindestens eines Reglerkoeffizienten des digitalen Reglers anhand des geschätzten instantanen Lastwiderstandswertes im Betrieb des Aufwärtswandlers.

Bevorzugt hat das Einstellen des mindestens einen Reglerkoeffizienten eine Erhöhung der Transitfrequenz zur Folge, wenn der im Schritt des Schätzens geschätzte Lastwiderstandswert größer ist als ein zuvor geschätzter oder initial berücksichtigter Lastwiderstandswert. Ein derartiges Verfahren ermöglicht die Realisierung eines Regelkreises mit einer maximal großen Transitfrequenz für den aktuellen Lastwiderstand, was die Effizienz der Regelung signifikant steigert.

In einer bevorzugten Ausführungsform hat das Einstellen des mindestens einen Reglerkoeffizienten eine Verringerung der Transitfrequenz zur Folge, wenn der geschätzte Lastwiderstandswert kleiner ist als ein zuvor geschätzter oder initial berücksichtigter Lastwiderstandswert. Bei Ausführung eines derartigen Verfahrens ist sichergestellt, dass der Regelkreis zu jeder Zeit stabil betreibbar ist.

Bevorzugt bedingt das Einstellen des mindestens einen Reglerkoeffizienten eine Verringerung oder eine Erhöhung der Transitfrequenz ($f_T$) um einen Betrag von $\Delta X$, wobei $\Delta X \in [0\ \text{Hz}; 20\text{kHz}]$ ist. Ferner bevorzugt bedingt das Einstellen des mindestens einen Reglerkoeffizienten eine Anpassung der Transitfrequenz ($f_T$) auf die maximal zulässige Transitfrequenz $f_{Tmax}$, wobei für $f_{Tmax}$ der Formelzusammenhang

$$f_{Tmax} = 1/(2*Pi)*1/3*R_L*(1-D)^2/L$$

gilt. In diesem Formelzusammenhang entspricht D dem Tastverhältnis des Reglers, $R_L$ dem Wert des Lastwiderstands in der Strecke und L dem Wert der Induktivität des Aufwärtswandlers. In einer derartigen Ausführung des Verfahrens kann für eine Veränderung im Lastwiderstandswert $R_L$ stets eine korrespondierende Änderung in der maximal zulässigen Transitfrequenz $f_{Tmax}$ bestimmt und eingestellt beziehungsweise herbeigeführt werden.

Bevorzugt kann eine im Schritt des Auswertens ausgewertete Ausgangsgröße des digitalen Reglers auch eine Ausgangsgröße des Regelkreises oder der Strecke des Regelkreises sein.

Bevorzugt handelt es sich bei dem im Schritt des Einstellens des mindestens einen Reglekoeffizienten des digitalen Reglers eingestellten beziehungsweise angepassten oder nachjustierten Reglerkoeffizienten um die Koeffizienten $a_0$, $a_1$, $b_0$ und $b_1$ des digitalen Reglers, wobei sich die Verstärkung des Reglers ergibt aus

$$DC\_gain\ (R_L) = K\_nom*(-1+2/5*R_L).$$

Die angepasste Nullstelle des Reglers ergibt sich bevorzugt aus

$$\omega_z(R_L) = \omega_{z,nom} + (80 * (R_L - 5))\ ,$$

während sich die angepassten Polstelle des Reglers bevorzugt aus

$$\omega_p(R_L) = \omega_{p,nom} + (5000 * (R_L - 5))$$

ergibt.

Diese Parameter gehen bei der Berechnung der Reglerübertragungsfunktion D(z) bevorzugt wie folgt ein

$$D(z) = DC_{gain} * \frac{\omega_p}{\omega_z} * \frac{\left(\omega_z * \frac{T}{2} + 1\right) + \left(\omega_z * \frac{T}{2} - 1\right) * z^{-1}}{\left(\omega_p * \frac{T}{2} + 1\right) + \left(\omega_p * \frac{T}{2} - 1\right) * z^{-1}} * \frac{1}{1 - z^{-1}}\ ,$$

wobei T der Abtastzeit entspricht. Dies lässt sich alternativ beschreiben mit

$$D(z) = K' * \frac{a_0 + a_1 * z^{-1}}{b_0 + b_1 * z^{-1}} * \frac{1}{1 - z^{-1}}\ ,$$

wobei sich mit

$$K' = DC_{gain} \times \frac{\omega_p}{\omega_z} \quad K' = DC_{gain} \times \frac{\omega_p}{\omega_z}$$

$$K' = DC_{gain} * \frac{\omega_p}{\omega_z},$$

die veränderlichen Reglerkoeffizienten des Reglers ergeben zu

$$a_0 = \left(\omega_z * \frac{T}{2} + 1\right)$$

$$a_1 = \left(\omega_z * \frac{T}{2} - 1\right)$$

$$b_0 = \left(\omega_p * \frac{T}{2} + 1\right)$$

$$b_1 = \left(\omega_p * \frac{T}{2} - 1\right).$$

Bevorzugt handelt es sich bei dem initial berücksichtigten Lastwiderstandswert um einen bei Inbetriebnahme beziehungsweise Einschaltung des Aufwärtswandlers voreingestellten Lastwiderstandswert.

Vorzugsweise werden im Schritt des Auswertens mindestens einer Ausgangsgröße die Ausgangsspannung des Regelkreises oder der Strecke, der Reglerausgangswert, das Tastverhältnis und/oder die Periodendauer des Reglers und/oder die Spannung der Kompensationsrampe des Aufwärtswandlers von Spitze zu Spitze ausgewertet. Eine derartige Auswertung im Rahmen des erfindungsgemäßen Verfahrens ermöglicht eine genaue Schätzung des Lastwiderstandswertes in der Strecke des Regelkreises. Bevorzugt entspricht eine Auswertung dem Auslesen der digital hinterlegten beziehungsweise gegebenen Ausgangsgrößen des digitalen Reglers, welche mithin im Schritt des Auswertens nicht gemessen werden zu brauchen. Ferner bevorzugt erfolgt im Schritt des Auswertens keine Messung der mindestens einen Ausgangsgröße.

Bevorzugt wird unter dem Reglerausgangswert ReglerAus im vorliegenden Fall der final berechnete Wert des digitalen Reglers, der als Stellgröße an die Strecke weitergegeben wird, verstanden.

Bevorzugt lässt sich die Spannung der Kompensationsrampe des Aufwärtswandlers von Spitze zu Spitze aus dem Stromfluss durch die Diode des Aufwärtswandlers im Betrieb desselben unter Berücksichtigung des Reglerausgangswertes sowie des Tastverhältnisses des Reglers ermitteln.

Erfindungsgemäß wird im Schritt des Schätzens der folgende Formelzusammenhang zur Schätzung des Lastwiderstandswertes verwandt:

$$R_L = \frac{U_{Aus}}{(1\text{-}D) * \left( \dfrac{ReglerAus - U_{Komp,ss} * D}{R_{Shunt}} - \dfrac{U_{Aus} * (1\text{-}D) * D * T_{SW}}{2 * L} \right)},$$

wobei $R_L$ der Wert des Lastwiderstands in der Strecke, $U_{Aus}$ der Wert der Ausgangsspannung des Regelkreises oder der Strecke, ReglerAus der Reglerausgangswert des Reglers, $U_{Komp,ss}$ der Wert der Spannung der Kompensationsrampe des Aufwärtswandlers von Spitze zu Spitze, D das Tastverhältnis des Reglers, $R_{Shunt}$ der Wert eines Shuntwiderstands zur Spulenstrommessung des Aufwärtswandlers, L der Wert der Induktivität des Aufwärtswandlers und $T_{SW}$ die Periodendauer des Reglers ist.

Bevorzugt werden im Schritt des Auswertens alle nach dem obigen Formelzusammenhang zur Schätzung des Lastwiderstandswertes benötigten Ausgangsgrößen des Reglers ausgewertet. Dieser unter anderem aus dem Stromfluss durch die Diode im Betrieb des Aufwärtswandlers hergeleitete Formelzusammenhang ermöglicht eine sehr genaue und zuverlässige Schätzung des Lastwiderstands. Mit anderen Worten ausgedrückt erlaubt dieser Formelzusammenhang, welcher geometrisch für einen Aufwärtswandler in Current Mode Control ermittelt werden kann, die Schätzung des Lastwiderstands und damit einhergehend des Laststroms durch den Lastwiderstand.

Bevorzugt umfasst das Verfahren ferner die Schritte des Messens mindestens einer Ausgangsgröße des digitalen Reglers und des Verwendens dieser mindestens einen gemessenen Ausgangsgröße im Schritt des Schätzens des instantanen Lastwiderstandswertes. Mit einer derartigen Ausführungsvariante des Verfahrens lassen sich Schwankungen beziehungsweise Ungenauigkeiten in der Ausgangsgröße durch eine zusätzlich vorgenommene Messung derselben eliminieren. Die Messung mindestens einer, einiger oder aller im Formelzusammenhang aufgeführten Ausgangsgrößen ermöglicht also eine genauere Schätzung des Lastwiderstandswertes.

Bevorzugt ist die mindestens eine gemessene und verwendete Ausgangsgröße der Wert der Ausgangsspannung des Regelkreises oder der Strecke, der Reglerausgangswert des Reglers, der Wert der Spannung der Kompensationsrampe des Aufwärtswandlers von Spitze zu Spitze, das Tastverhältnis des Reglers, der Wert der Eingangsspannung des Reglers und/oder die Periodendauer des Reglers. Vorzugsweise umfassen die gemessenen und verwendeten Ausgangsgrößen also den Wert der Ausgangsspannung des Regelkreises oder der Strecke, den Reglerausgangswert des Reglers, den Wert der Spannung der Kompensationsrampe des Aufwärtswandlers von Spitze zu Spitze, das Tastverhältnis des Reglers, den Wert der Eingangsspannung des Reglers und/oder die Periodendauer des Reglers. In einer derartigen Ausführung erfolgt im Rahmen des Verfahrens eine sehr genaue Schätzung des Lastwiderstandes und dementsprechend eine sehr sichere Anpassung beziehungsweise Einstellung oder Nachjustierung der Transitfrequenz des Regelkreises des Aufwärtswandlers.

Besonders bevorzugt wird das Tastverhältnis gemessen und im Formelzusammenhang verwandt. Das Tastverhältnis kann ausgewertet und verlustfrei in den Formelzusammenhang eingesetzt werden. Das Tastverhältnis ist in der Realität jedoch durch Verluste meist etwas größer, was durch eine zusätzliche Messung desselben berücksichtigt werden kann. Ferner bevorzugt wird die Eingangsspannung des Reglers gemessen und in dem Formelzusammenhang zwecks Schätzung verwandt.

Vorzugsweise ist der Betrag der Transitfrequenz zu jeder Zeit geringer als derjenige Frequenzbetrag, welcher der Nullstelle der Übertragungsfunktion des Regelkreises in der rechten Halbebene eines Pol-Nullstellen-Diagramms zuordenbar ist. Ferner bevorzugt ist der Betrag der Transitfrequenz zu jeder Zeit deutlich oder wesentlich geringer als derjenige Frequenzbetrag, welcher der Nullstelle der Übertragungsfunktion des Regelkreises in der rechten Halbebene eines Pol-Nullstellen-Diagramms zuordenbar ist. Ferner bevorzugt liegt die Transitfrequenz zu jeder Zeit unterhalb der Nullstelle der Übertragungsfunktion des Regelkreises in der rechten Halbebene eines Pol-Nullstellen-Diagramms. Durch die Erfüllung dieser Bedingung ist sichergestellt, dass der Regelkreis und damit der Aufwärtswandler zu jeder Zeit sicher und stabil betreibbar sind.

Des Weiteren bevorzugt wird ein Regelkreis für einen Aufwärtswandler mit einem digitalen Regler zur Verfügung gestellt, welcher eingerichtet ist, um die Schritte des erfindungsgemäßen Verfahrens durchzuführen. Die zuvor zum Verfahren genannten Vorteile kommen hier im Rahmen des Betriebs des Regelkreises zum Tragen.

Ferner zur Verfügung gestellt wird ein Computerprogrammprodukt mit computerausführbarem Programmcode zur Durchführung des erfindungsgemäßen Verfahrens, wenn das Programm auf einer Vorrichtung ausgeführt wird. Die zuvor zum Verfahren genannten Vorteile kommen hier im Rahmen der Ausführung des Programms auf einer Vorrichtung zum Tragen.

Vorteilhafte Weiterbildungen der Erfindung sind in den Unteransprüchen angegeben und in der Beschreibung beschrieben.

Zeichnungen

Ausführungsbeispiele der Erfindung werden anhand der Zeichnungen und der nachfolgenden Beschreibung näher erläutert. Es zeigen:

Figur 1 einen Aufwärtswandler des Standes der Technik,

Figur 2 ein Diagramm, in welchem die einer jeweiligen Rechte-Halbebene-Nullstelle RHPZ bei gegebenem Lastwiderstand $R_L$ im Regelkreis jeweils zuordenbare Frequenz sowie verschiedene Transitfrequenzen $f_{Tmax}$, $f_{Tinst}$ des Regelkreises eines Aufwärtswandlers in Hertz über dem Lastwiderstand $R_L$ der Strecke des Regelkreises in Ohm abgetragen sind,

Figur 3 das Blockschaltbild eines Ausführungsbeispiels eines erfindungsgemäßen Regelkreises für einen Aufwärtswandler mit einem digitalen Regler, bei dessen Betrieb ein Ausführungsbeispiel eines erfindungsgemäßen Verfahrens zum Einsatz kommt,

Figur 4 ein Diagramm, in welchem der über die Zeit abgetragene Stromfluss durch die Diode eines Aufwärtswandlers in dessen Betrieb dargestellt ist, anhand dessen der Formelzusammenhang zur Schätzung des Lastwiderstandswertes geometrisch hergeleitet werden kann, und

Figur 5 einen Performance-Vergleich zwischen einem unter Ausführung eines Ausführungsbeispiels eines erfindungsgemäßen Verfahrens betriebenen, in einem Regelkreis für einen Aufwärtswandler vorgesehenen digitalen Regler mit einem nach einem Verfahren des Standes der Technik betriebenen Regler.

Ausführungsformen der Erfindung

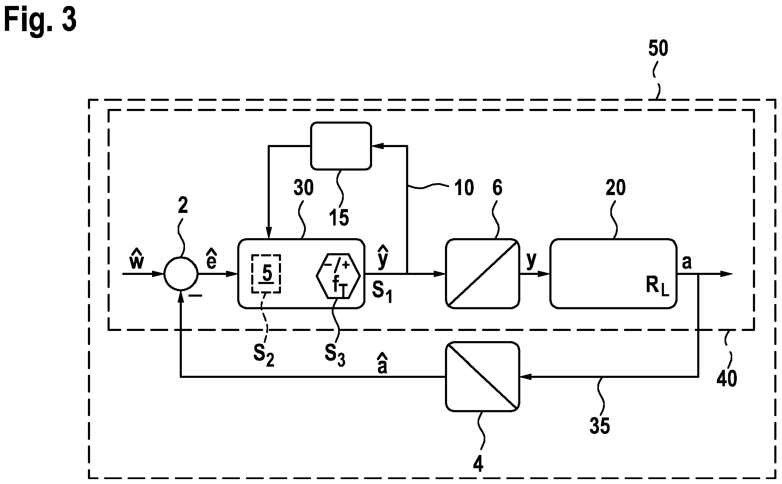

In der Figur 3 ist das Blockschaltbild eines Ausführungsbeispiels eines erfindungsgemäßen Regelkreises 50 für einen Aufwärtswandler mit einem digitalen Regler 30 gezeigt, bei dessen Betrieb ein Ausführungsbeispiel eines erfindungsgemäßen Verfahrens zum Einsatz kommt. Der Regelkreis 50 umfasst eine Regelstrecke 40 und eine Rückführung 35. Innerhalb der Regelstrecke 40 dieses Ausführungsbeispiels eines erfindungsgemäßen Regelkreises 50 ist ein digitaler Regler 30 mit eigener Regler-Rückkopplungsschleife 10 angeordnet. Die Regler-Rückkopplungsschleife 10 weist ein eigenes Rückkopplungsglied 15 innerhalb der Regler-Rückkopplungsschleife 10 auf. Der Aufwärtswandler samt des von diesem gespeisten Lastwiderstandes $R_L$ beziehungsweise die Komponenten des Aufwärtswandlers sind in dem in Figur 3 dargestellten Regelkreis 50 innerhalb der Regelstrecke 40 mit der Strecke 20 berücksichtigt. Der Regelkreis 50 weist in der Regelstrecke 40 ferner einen Digital-AnalogWandler 6 auf, welcher digitale Ausgangsgrößen $\hat{y}$ des Reglers 30 für den Aufwärtswandler in analoge Ausgangsgrößen y wandelt. In der Rückführung 35 des Regelkreises 50 ist ferner ein Anlog-Digital-Wandler 4 vorgesehen, mittels welchem analoge Regelgrößen a - die Ausgangsspannung am Ausgang des Aufwärtswandlers - am Ausgang der Strecke 20 abgegriffen und zwecks Ruckführung in digitale Regelgrößen ä gewandelt werden. In einem Subtrahierglied 2 des Regelkreises 50 werden digitale Sollwerte $\hat{w}$, welche von außerhalb in den Regelkreis 50 eingespeist werden, mit zuvor von analog zu digital gewandelten, digitalen Regelgrößen ä zu digitalen Regelabweichungen ê = $\hat{w}$ - â zusammengeführt. Diese digitalen Regelabweichungen ê stellen die Eingangsgrößen für den digitalen Regler 30 dar, welcher diese zur Bereitstellung der digitalen Ausgangsgrößen $\hat{y}$ für den Aufwärtswandler benötigt, wie beispielsweise für die Bereitstellung der Ausgangsspannung $U_{Aus}$ oder des auch als duty cycle bezeichneten Tastverhältnisses D des Aufwärtswandlers. Über die Regler-Rückkopplungsschleife 10 mit dem Rückkopplungsglied 15 werden unerwünschte Abweichungen in den digitalen Ausgangsgrößen $\hat{y}$ des digitalen Reglers 30 ausgeregelt. Die digitalen Ausgangsgrößen $\hat{y}$ werden mittels des Digital-Analog-Wandlers 6 in der Regelstrecke 40 in analoge Ausgangsgrößen y gewandelt und der Strecke 20, also insbesondere dem Aufwärtswandler, zugeführt.

Im Rahmen dieses Ausführungsbeispiels eines erfindungsgemäßen Verfahrens werden im ersten Verfahrens- schritt $S_1$ des Verfahrens rein beispielhaft der Wert der Ausgangsspannung $U_{Aus}$ des Regelkreises 50 oder der Strecke 20, der Reglerausgangswert ReglerAus des Reglers 30, der Wert der Spannung der Kompensationsrampe des Aufwärtswandlers von Spitze zu Spitze $U_{Komp,ss}$, das Tastverhältnis D des Reglers 30 und die Periodendauer $T_{sw}$ des Reglers 30 im Betrieb des Aufwärtswandlers ausgewertet. Diese Ausgangsgrößen des Reglers 30 werden also nicht im Regelkreis 50 gemessen, sondern digital ausgelesen. Es können allerdings auch andere erfindungsgemäße Verfahren ausgeführt werden, bei welchen weniger, mehr beziehungsweise auch andere Ausgangsgrößen des Reglers 30 oder des Regelkreises 50 im Rahmen eines ersten Verfahrensschritts im Betrieb des Aufwärtswandlers ausgewertet werden, beispielsweise ausschließlich die Ausgangsspannung $U_{Aus}$ des Regelkreises 50 oder der Strecke 20, oder ausschließlich der Reglerausgangswert ReglerAus oder aber auch ganz andere Ausgangswerte des Reglers 30. Es können auch erfindungsgemäße Verfahren ausgeführt werden, bei welchen weit mehr als die oben aufgezählten Ausgangsgrößen ausgewertet werden. In solchen Verfahren kann dann im Rahmen der Schätzung hinsichtlich der nicht ausgewerteten Ausgangsgrößen beispielsweise auf, auf sonstige Art und Weise, hinterlegte oder aber auch gemessene Ausgangswerte zurückgegriffen werden. In diesem Ausführungsbeispiel des Verfahrens sind der Wert eines Shuntwiderstands zur Spulenstrommessung Rshunt, der Wert der Kompensationsrampe des Aufwärtswandlers von Spitze zu Spitze $U_{Komp,ss}$, das Tastverhältnis (Duty Cycle), die Schaltfrequenz, die Ausgangsspannung des Regelkreises oder Strecke sowie der Wert der Induktivität L des Aufwärtswandlers digital hinterlegt.

Im zweiten Verfahrensschritt $S_2$ dieses Ausführungsbeispiels wird der instantane Lastwiderstandswert $R_L$ in der Strecke 20 des Regelkreises 50 anhand der ausgewerteten Ausgangsgrößen geschätzt. Die Schätzung erfolgt dabei in diesem Ausführungsbeispiel des Verfahrens rein beispielhaft nach dem folgenden Formelzusammenhang:

$$R_L = \cfrac{U_{Aus}}{(1-D) * \left( \cfrac{ReglerAus - U_{Komp,ss} * D}{R_{Shunt}} - \cfrac{U_{Aus} * (1-D) * D * T_{SW}}{2 * L} \right)} \quad ,$$

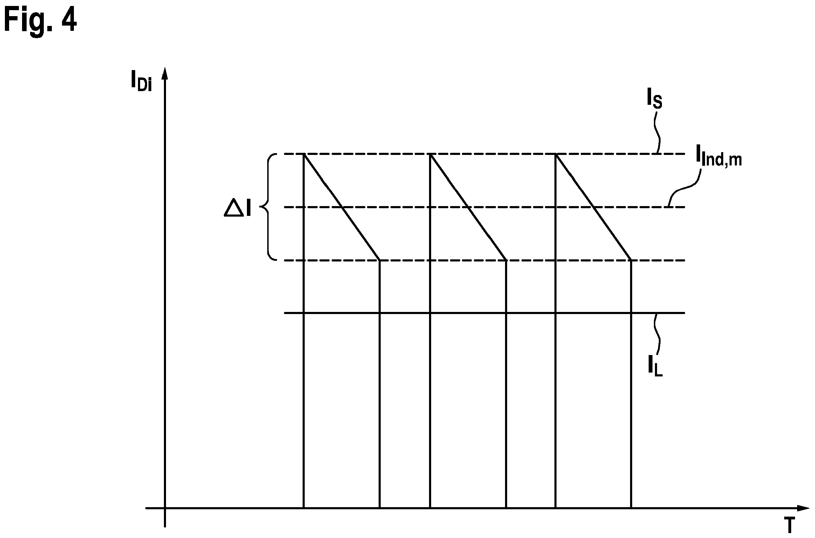

wobei $R_L$ der Wert des Lastwiderstands in der Strecke, $U_{Aus}$ der Wert der Ausgangsspannung des Regelkreises 50 oder der Strecke 20, ReglerAus der Reglerausgangswert des Reglers, $U_{Komp,ss}$ der Wert der Spannung der Kompensationsrampe des Aufwärtswandlers von Spitze zu Spitze, D das Tastverhältnis des Reglers, $R_{Shunt}$ der Wert eines Shuntwiderstands zur Spulenstrommessung des Aufwärtswandlers, L der Wert der Induktivität des Aufwärtswandlers und $T_{sw}$ die Periodendauer des Reglers ist. Die Schätzung kann in anderen Ausführungsbeispielen erfindungsgemäßer Verfahren aber auch entsprechend eines anderen Formelzusammenhangs erfolgen, welcher von demjenigen Formelzusammenhang, auf welchen für die Schätzung in diesem Ausführungsbeispiel zurückgegriffen wird, abweicht. Die geometrische Herleitung dieses Formelzusammenhangs wird in der Beschreibung zu der Figur 4 dargelegt.

Die Schätzung im zweiten Verfahrensschritt $S_2$ kann dabei rein beispielhaft von einer digitalen Recheneinheit oder einer anderen logischen Einheit vorgenommen werden. Auch kann die Schätzung außerhalb des Regelkreises 50 vorgenommen werden. In diesem Ausführungsbeispiel wird die Schätzung rein beispielhaft von einer digitalen Recheneinheit 5 vorgenommen, welche innerhalb des digitalen Reglers 30 vorgesehen und in Figur 3 schematisch dargestellt ist.

Im dritten Verfahrensschritt $S_3$ des Verfahrens werden verschiedenen Reglerkoeffizienten des digitalen Reglers 30 anhand des geschätzten instantanen Lastwiderstandswertes $R_L$ im Betrieb des Aufwärtswandlers eingestellt, wobei eine Veränderung in der Einstellung des mindestens einen Reglerkoeffizienten eine Veränderung der Transitfrequenz $f_T$ im Regelkreis 30 bedingt. Mit anderen Worten ausgedrückt werden im dritten Verfahrensschritt $S_3$ dieses Ausführungsbeispiels verschiedene Reglerkoeffizienten des Reglers 30 anhand des geschätzten Lastwiderstandswertes $R_L$ derart nachjustiert beziehungsweise angepasst, dass die Transitfrequenz $f_T$ im Regelkreis 30 an die Veränderung in der Position der Rechte-Halbebene-Nullstelle angepasst wird, sofern eine solche Veränderung vorliegt. Im Blockschaltbild der Figur 3 wird die auf die Transitfrequenz $f_T$ einwirkende Einstellung der Reglerkoeffizienten der Übersichtlichkeit halber schematisch anhand eines -/+ - Symbols auf dem Block des digitalen Reglers 30 veranschaulicht. Dies dient lediglich dem besseren Verständnis. Das Einstellen der Reglerkoeffizienten erfolgt in diesem Ausführungsbeispiel im Rahmen des Verfahrens innerhalb des Regelkreises 50, bei welchen im Rahmen des dritten Verfahrensschritts S3 weniger, mehr und/oder auch andere Reglerkoeffizienten des Reglers 30 infolge einer Lastwiderstandsschätzung eingestellt, angepasst beziehungsweise nachjustiert werden können.

Die Einstellung der Reglerkoeffizienten im dritten Verfahrensschritt S3 hat in diesem Ausführungsbeispiel also rein beispielhaft eine Erhöhung der Transitfrequenz $f_T$ zur Folge, wenn der im Schritt des Schätzens S2 geschätzte Lastwiderstandswert $R_L$ größer ist als ein zuvor geschätzter oder initial berücksichtigter Lastwiderstandswert $R_L$. Genauso hat die Einstellung der Reglerkoeffizienten im dritten Verfahrensschritt S3 eine Verringerung der Transitfrequenz $f_T$ zur Folge, wenn der geschätzte Lastwiderstandswert $R_L$ kleiner ist als ein zuvor geschätzter oder initial berücksichtigter Lastwiderstandswert $R_L$. Somit wird die Transitfrequenz $f_T$ des Regelkreises über eine Einstellung beziehungsweise Anpassung der Reglerkoeffizienten stets an die Position der Rechte-Halbebene-Nullstelle im Pol-Nullstellen-Diagramm angepasst. Zur Klarstellung sei erwähnt, dass im Rahmen dieses Ausführungsbeispiels keine Einstellung, Anpassung beziehungsweise

Nachjustierung der Reglerkoeffizienten erfolgt, wenn der im Verfahrensschritt S2 geschätzte Lastwiderstandswert $R_L$ gegenüber einem zuvor geschätzten oder initial eingestellten Lastwiderstandswert $R_L$ unverändert geblieben ist. In diesem Ausführungsbeispiel wird die Einstellung der Reglerkoeffizienten rein beispielhaft ebenfalls von der digitalen Recheneinheit 5 vorgenommen. Es können aber auch andere Ausführungsbeispiele realisiert werden, in welchen die Einstellung von anderen Einheiten beziehungsweise Mitteln oder auf andere Art und Weise vorgenommen wird.

In diesem Ausführungsbeispiel erfolgt wie oben dargelegt keine Messung von Ausgangsgrößen des Reglers 30. Es können aber auch erfindungsgemäße Verfahren ausgeführt werden, bei welchen einzelne Ausgangsgrößen des Reglers 30 gemessen werden, zum Beispiel zusätzlich oder alternativ zu deren Auswertung. Durch eine solche zusätzliche Messung von Ausgangsgrößen können die von diesen aufgewiesenen Schwankungen eliminiert und die Schätzung des Lastwiderstandswertes $R_L$ verbessert werden.

Figur 4 zeigt ein Diagramm, in welchem der über die Zeit T abgetragene Stromfluss $I_{Di}$ durch die Diode Di eines wie in Figur 1 dargestellten Aufwärtswandlers 1 in dessen Betrieb dargestellt ist, anhand dessen der Formelzusammenhang zur Schätzung des Lastwiderstandswertes $R_L$ geometrisch hergeleitet werden kann. Konkret ist in Figur 4 der im geöffneten und der im geschlossenen Zustand des in Figur 1 gezeigten Schaltmittels S durch die ebenfalls in Figur 1 gezeigte Diode Di fließende Strom $I_{Di}$ dargestellt. Der im geschlossenen Zustand des Schaltmittels S durch die Diode Di fließende Strom beträgt 0 A. Der im geöffneten Zustand des Schaltmittels S durch die Diode Di fließende Strom fällt aufgrund der Strom-Spannungscharakteristik des Induktivität rampenartig je Öffnungszyklus über die Zeit linear ab. Dabei kennzeichnet $\Delta I$ die Differenz aus dem auch als Peak-Strom bezeichneten Spitzenstrom $I_s$ durch die Diode Di sowie aus dem geringsten durch die Diode Di fließenden Strom. Der mittlere Spulenstrom $I_{Ind,m}$ durch die Induktivität L des Aufwärtswandlers (siehe Figur 1) ergibt sich dann gemäß $I_{Ind,m} = I_s - (\Delta I)/2$. Für den Laststrom $I_L$, welcher durch den mittels des Aufwärtswandlers gespeisten Lastwiderstand $R_L$ fließt, gilt $I_L = (1-D) * I_{Ind,m}$, wobei D dem Tastverhältnis des Reglers 30 entspricht.

Für $\Delta I$ gilt:

$$\Delta I = \frac{U_{ein} D T_{SW}}{L}$$ ,

wobei $U_{Ein}$ der Wert der Eingangsspannung der Strecke 30, L der Wert der Induktivität des Aufwärtswandlers und $T_{SW}$ die Periodendauer des Reglers 30 ist. Für den Spitzenstrom $I_s$ kann dann gefolgert werden:

$$I_S = \frac{RleglerAus - U_{Komp,ss} * D}{R_{Shunt}}$$ ,

wobei ReglerAus der Reglerausgangswert des Reglers 30, $U_{Komp,ss}$ der Wert der Spannung der Kompensationsrampe des Aufwärtswandlers von Spitze zu Spitze (siehe Figur 4) und $R_{Shunt}$ der Wert eines Shuntwiderstands zur Spulenstrommessung des Aufwärtswandlers (nicht dargestellt) ist. Der Laststrom $I_L$ ergibt sich dann aus der Gleichung:

$$I_L = (1-D) * \left( \frac{RleglerAus - U_{Komp,ss} * D}{R_{Shunt}} - \frac{U_{Aus} * (1-D) * D * T_{SW}}{2 * L} \right)$$ ,

wobei $U_{Aus}$ die Ausgangsspannung Regelkreises 50 oder der Strecke 20 ist. Dies eingesetzt in das Ohmsche Gesetz ergibt dann den gesuchten Formelzusammenhang für die Schätzung des Lastwiderstands $R_L$:

$$R_L = \frac{U_{Aus}}{(1-D) * \left( \dfrac{RleglerAus - U_{Komp,ss} * D}{R_{Shunt}} - \dfrac{U_{Aus} * (1-D) * D * T_{SW}}{2 * L} \right)}$$

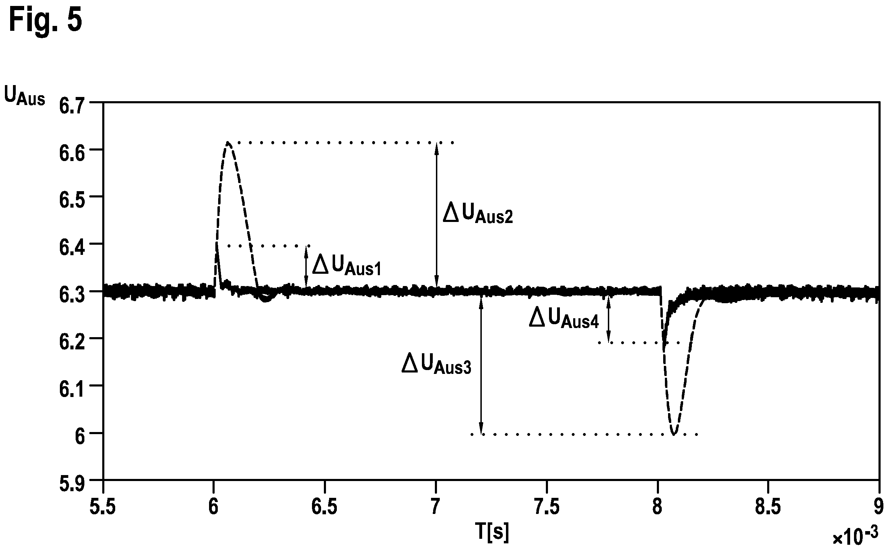

Figur 5 zeigt einen Performance-Vergleich zwischen einem unter Ausführung eines Ausführungsbeispiels eines erfindungsgemäßen Verfahrens betriebenen, in einem Regelkreis 50 für einen Aufwärtswandler vorgesehenen digitalen Regler 30 mit einem nach einem Verfahren des Standes der Technik betriebenen Regler in einem Regelkreis des Standes der Technik für einen Aufwärtswandler. Konkret zeigt Figur 5 ein Diagramm, in welchem die Ausgangsspannungen $U_{Aus}$ der beiden Vergleichsregelkreise über der Zeit in Sekunden abgetragen sind. Dabei ist der Ausgangsspannungsverlauf des erfindungsgemäß betriebenen Regelkreises 50 mit durchgezogener Linie dargestellt, während der Ausgangsspannungsverlauf des nach dem Verfahren des Standes der Technik betriebenen Regelkreises gestrichelt dargestellt ist. Mit Doppelpfeilen sind in Figur 5 die Beträge der Spannungssprünge $\Delta U_{Aus}$, also der Ausgangsspan-nungsspitzen beziehungsweise die Beträge der Amplituden der Ausgangsspannungen der Vergleichsregelkreise bei einer Veränderung der Lastsituation im Regelkreis dargestellt.

In Figur 5 ist deutlich ersichtlich, dass sich aufgrund von Veränderungen in der Lastsituation ergebende Span-nungssprünge $\Delta U_{Aus}$ in der Ausgangsspannung $U_{Aus}$ bei Regelkreisen mit nach dem erfindungsgemäßen Verfahren betriebenen Reglern 30 deutlich geringer ausfallen als bei nach Verfahren des Standes der Technik betriebenen Reglern. Dies ist darauf zurückzuführen, dass das erfindungsgemäße Verfahren die Reaktionszeiten des Reglers im Regelkreis deutlich verkürzt. Die nach dem erfindungsgemäßen Verfahren betriebenen Regler können mithin schneller auf Schwankungen im Lastwiderstandswert $R_L$ in der Strecke 20 des Regelkreises 50 reagieren. Vorliegend betragen die gemes-senen Spannungssprünge $\Delta U_{Aus}$ in den in Figur 5 dargestellten Ausgangsspannungsverläufen rein beispielhaft $\Delta U_{Aus1}$ = 0,1V; $\Delta U_{Aus2}$ = 0,31V; $\Delta U_{Aus3}$ = 0,3V und $\Delta U_{Aus4}$ = 0,1V.

Anhand der Messung der Ausgangsspannung $U_{Aus}$ bei Lastwiderstandssprüngen lässt sich auch zeigen, dass ein Ausführungsbeispiel eines erfindungsgemäßen Verfahrens zur Anwendung kommt. Die Spannungseinbrüche $\Delta U_{Aus}$ hängen näherungsweise von $\Delta I_L$- und dadurch von den jeweils zugrunde liegenden Lastwiderstandsänderungen $\Delta R_L$-, der Ausgangskapazität C (siehe Figur 1) und der jeweiligen Transitfrequenz $f_T$ des Regelkreises ab.

Es gilt allgemein der Zusammenhang $\Delta U_{Aus} = (\Delta I_L) / (C_* 2\,\pi\,f_T)$.

Die veränderte Transitfrequenz $f_T$ wird daher bei Stromsprüngen mit gleichem $\Delta I_L$ und verschiedenen Absolutwerten, also zum Beispiel bei einem Vergleich von Laststromsprüngen $\Delta I_L$ von 1 A auf 1,2 A mit Laststromsprüngen $\Delta I_L$ von 0,3 A auf 0,5 A durch verschieden große Spannungseinbrüche $\Delta U_{Aus}$ sichtbar. Ferner ist bei Messungen des Frequenzganges der offenen Schleife des Regelkreises bei verschiedenen Lastwiderständen $R_L$ zu sehen, dass die Transitfrequenz $f_T$ des Regelkreises variiert und somit ein adaptiver Mechanismus gegeben ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

**Patentansprüche**

1. Verfahren zur Optimierung des Betriebs eines in einem Regelkreis (50) für einen Aufwärtswandler vorgesehenen digitalen Reglers (30), welches die folgenden Verfahrensschritte umfasst:

   - Auswerten (S1) mindestens einer Ausgangsgröße des digitalen Reglers (30) im Betrieb des Aufwärtswandlers;
   - Schätzen (S2) des instantanen Lastwiderstandswertes ($R_L$) in der Strecke (20) des Regelkreises (50) anhand der mindestens einen ausgewerteten Ausgangsgröße;
   - Einstellen beziehungsweise anpassen (S3) mindestens eines Reglerkoeffizienten des digitalen Reglers (30) an die Position der Rechte-Halbebene-Nullstelle im Pol-Nullstellen-Diagramm, anhand des geschätzten instantanen Lastwiderstandswertes ($R_L$) im Betrieb des Aufwärtswandlers,

   wobei eine Veränderung in der Einstellung des mindestens einen Reglerkoeffizienten eine Veränderung der Transitfrequenz ($f_T$) des Regelkreises (50) bedingt und wobei im Schritt des Schätzens (S2) der folgende Formelzusammenhang zur Schätzung des Lastwiderstandswertes ($R_L$) verwandt wird:

   $$R_L = \frac{U_{Aus}}{(1\text{-}D) * \left( \dfrac{ReglerAus - U_{Komp,ss} * D}{R_{Shunt}} - \dfrac{U_{Aus} * (1\text{-}D) * D * T_{SW}}{2 * L} \right)}$$

   wobei $R_L$ der Wert des Lastwiderstands in der Strecke (20), $U_{Aus}$ der Wert der Ausgangsspannung des Regelkreises (50) oder der Strecke (20), ReglerAus der Reglerausgangswert des Reglers (30), $U_{Komp,ss}$ der Wert der Spannung der Kompensationsrampe des Aufwärtswandlers von Spitze zu Spitze, D das Tastverhältnis des Reglers (30), $R_{Shunt}$ der Wert eines Shuntwiderstands zur Spulenstrommessung des Aufwärtswandlers, L der Wert der Induktivität des Aufwärtswandlers und $T_{sw}$ die Periodendauer des Reglers (30) ist.

2. Verfahren nach Anspruch 1, wobei das Einstellen (S3) des mindestens einen Reglerkoeffizienten eine Erhöhung der Transitfrequenz ($f_T$) zur Folge hat, wenn der im Schritt des Schätzens (S2) geschätzte Lastwiderstandswert ($R_L$) größer ist als ein zuvor geschätzter oder initial berücksichtigter Lastwiderstandswert ($R_L$).

3. Verfahren nach einem der vorhergehenden Ansprüche, wobei das Einstellen (S3) des mindestens einen Reglerkoeffizienten eine Verringerung der Transitfrequenz ($f_T$) zur Folge hat, wenn der geschätzte Lastwiderstandswert ($R_L$) kleiner ist als ein zuvor geschätzter oder initial berücksichtigter Lastwiderstandswert ($R_L$).

4. Verfahren nach einem der vorhergehenden Ansprüche, wobei im Schritt des Auswertens (S1) mindestens einer Ausgangsgröße die Ausgangsspannung ($U_{Aus}$) des Regelkreises (50) oder der Strecke (20), der Reglerausgangswert (ReglerAus), das Tastverhältnis (D) und/oder die Periodendauer ($T_{sw}$) des Reglers (30) und/oder die Spannung der Kompensationsrampe des Aufwärtswandlers von Spitze zu Spitze ($U_{Komp,ss}$) ausgewertet wird.

5. Verfahren nach einem der vorhergehenden Ansprüche, ferner umfassend die Schritte des Messens (S4) mindestens einer Ausgangsgröße des digitalen Reglers (30) und des Verwendens (S5) dieser mindestens einen gemessenen Ausgangsgröße im Schritt des Schätzens (S2) des instantanen Lastwiderstandswertes (R_L).

6. Verfahren nach Anspruch 5, wobei die mindestens eine gemessene und verwendete Ausgangsgröße der Wert der Ausgangsspannung (U_{Aus}) des Regelkreises (50) oder der Strecke (20), der Reglerausgangswert (ReglerAus) des Reglers (30), der Wert der Spannung der Kompensationsrampe des Aufwärtswandlers von Spitze zu Spitze (U_{Komp,ss}), das Tastverhältnis (D) des Reglers (30), der Wert der Eingangsspannung (Uein) des Reglers (30) und/oder die Periodendauer (T_{SW}) des Reglers (30) ist.

7. Verfahren nach einem der vorhergehenden Ansprüche, wobei der Betrag der Transitfrequenz (f_T) zu jeder Zeit geringer ist als derjenige Frequenzbetrag, welcher der Nullstelle der Übertragungsfunktion des Regelkreises (50) in der rechten Halbebene eines Pol-Nullstellen-Diagramms zuordenbar ist.

8. Aufwärtswandler mit einem digitalen Regler (30) welcher eingerichtet ist, um die Schritte des Verfahrens gemäß einem der vorhergehenden Ansprüche durchzuführen.

9. Computerprogrammprodukt mit computerausführbarem Programmcode zur Durchführung des Verfahrens nach einem der Ansprüche 1 bis 7, wenn das Programm auf einer Vorrichtung gemäß Anspruch 8 ausgeführt wird.

## Claims

1. Method for optimizing the operation of a digital controller (30) provided in a control loop (50) for a boost converter, which method comprises the following method steps of:

   - evaluating (S1) at least one output variable of the digital controller (30) during operation of the boost converter;
   - estimating (S2) the instantaneous load resistance value (R_L) in the path (20) of the control loop (50) on the basis of the at least one evaluated output variable;
   - adjusting or adapting (S3) at least one controller coefficient of the digital controller (30) to the position of the right half-plane zero point in the pole zero point diagram on the basis of the estimated instantaneous load resistance value (R_L) during operation of the boost converter,

   wherein a change in the adjustment of the at least one controller coefficient causes a change in the transit frequency (f_T) of the control loop (50), and wherein the following formulaic relationship is used in the estimation step (S2) to estimate the load resistance value (R_L):

$$R_L = \frac{U_{Aus}}{(1-D)*\left(\frac{ReglerAus - U_{Komp,ss}*D}{R_{Shunt}} - \frac{U_{Aus}*(1-D)*D*T_{SW}}{2*L}\right)}$$

   where R_L is the value of the load resistance in the path (20), U_{Aus} is the value of the output voltage of the control loop (50) or of the path (20), ReglerAus is the controller output value of the controller (30), U_{Komp,ss} is the value of the voltage of the compensation ramp of the boost converter from peak to peak, D is the duty ratio of the controller (30), R_{Shunt} is the value of a shunt resistance for measuring the coil current of the boost converter, L is the value of the inductance of the boost converter and T_{SW} is the period duration of the controller (30).

2. Method according to Claim 1, wherein the adjustment (S3) of the at least one controller coefficient increases the transit frequency (f_T) if the load resistance value (R_L) estimated in the estimation step (S2) is greater than a previously estimated or initially considered load resistance value (R_L).

3. Method according to one of the preceding claims, wherein the adjustment (S3) of the at least one controller coefficient reduces the transit frequency (f_T) if the estimated load resistance value (R_L) is less than a previously estimated or initially considered load resistance value (R_L).

4. Method according to one of the preceding claims, wherein the output voltage (U_{Aus}) of the control loop (50) or of the path (20), the controller output value (ReglerAus), the duty ratio (D) and/or the period duration (T_{SW}) of the controller (30) and/or the voltage of the compensation ramp of the boost converter from peak to peak (U_{Komp,ss}) is/are evaluated in the step of evaluating (S1) at least one output variable.

5. Method according to one of the preceding claims, also comprising the steps of measuring (S4) at least one output variable of the digital controller (30) and using (S5) this at least one measured output variable in the step of estimating (S2) the instantaneous load resistance value ($R_L$).

6. Method according to Claim 5, wherein the at least one measured and used output variable is the value of the output voltage ($U_{Aus}$) of the control loop (50) or of the path (20), the controller output value (ReglerAus) of the controller (30), the value of the voltage of the compensation ramp of the boost converter from peak to peak ($U_{Komp,ss}$), the duty ratio (D) of the controller (30), the value of the input voltage ($U_{ein}$) of the controller (30) and/or the period duration ($T_{SW}$) of the controller (30).

7. Method according to one of the preceding claims, wherein the value of the transit frequency ($f_T$) at any time is lower than that frequency value which can be assigned to the zero point of the transfer function of the control loop (50) in the right half-plane of a pole zero point diagram.

8. Boost converter having a digital controller (30) which is configured to carry out the steps of the method according to one of the preceding claims.

9. Computer program product having computer-executable program code for carrying out the method according to one of Claims 1 to 7 when the program is executed on an apparatus according to Claim 8.

## Revendications

1. Procédé d'optimisation du fonctionnement d'un régulateur numérique (30) qui est prévu dans un circuit de régulation (50) destiné à un convertisseur élévateur, lequel procédé comprend les étapes suivantes :

   - évaluer (S1) au moins une grandeur de sortie du régulateur numérique (30) pendant le fonctionnement du convertisseur élévateur ;
   - estimer (S2) la valeur de résistance de charge instantanée ($R_L$) dans la section (20) du circuit de régulation (50) sur la base de l'au moins une grandeur de sortie évaluée ;
   - régler ou adapter (S3) au moins un coefficient du régulateur numérique (30) à la position du zéro du demi-plan droit dans le diagramme des pôles et des zéros sur la base de la valeur de résistance de charge instantanée estimée ($R_L$) pendant le fonctionnement du convertisseur élévateur,

   une variation du réglage de l'au moins un coefficient de régulateur entraînant une variation de la fréquence de transit ($f_T$) du circuit de régulation (50) et la formule suivante étant utilisée à l'étape d'estimation (S2) pour estimer la valeur de résistance de charge ($R_L$) :

$$R_L = \frac{U_{Aus}}{(1-D) * \left( \dfrac{ReglerAus - U_{Komp,ss} * D}{R_{Shunt}} - \dfrac{U_{Aus} * (1-D) * D * T_{SW}}{2 * L} \right)}$$

   où $R_L$ est la valeur de la résistance de charge dans la section (20), $U_{Aus}$ est la valeur de la tension de sortie du circuit de régulation (50) ou de la section (20), ReglerAus est la valeur de sortie du régulateur (30), $U_{Komp,ss}$ est la valeur de la tension de la rampe de compensation du convertisseur élévateur de crête à crête, D est le rapport cyclique du régulateur (30), $R_{Shunt}$ est la valeur d'une résistance shunt pour mesurer le courant de bobine du convertisseur élévateur, L est la valeur de l'inductance du convertisseur élévateur et $T_{SW}$ est la période du régulateur (30).

2. Procédé selon la revendication 1, le réglage (S3) de l'au moins un coefficient de régulateur se traduisant par une augmentation de la fréquence de transit ($f_T$) si la valeur de résistance de charge ($R_L$) estimée à l'étape d'estimation (S2) est supérieure à une valeur de résistance de charge ($R_L$) précédemment estimée ou initialement considérée.

3. Procédé selon l'une des revendications précédentes, le réglage (S3) de l'au moins un coefficient de régulateur se traduisant par une réduction de la fréquence de transit ($f_T$) si la valeur de résistance de charge ($R_L$) estimée est inférieure à une valeur de résistance de charge ($R_L$) précédemment estimée ou initialement considérée.

4. Procédé selon l'une des revendications précédentes, la tension de sortie ($U_{Aus}$) du circuit de régulation (50) ou de la section (20), la valeur de sortie du régulateur (ReglerAus), le rapport cyclique (D) et/ou la période ($T_{SW}$) du régulateur (30) et/ou la tension de la rampe de compensation du convertisseur élévateur de crête à crête ($U_{Komp,ss}$) étant évalués à l'étape d'évaluation (S1) d'au moins une variable de sortie.

5. Procédé selon l'une des revendications précédentes, comprenant en outre les étapes de mesure (S4) d'au moins une grandeur de sortie du régulateur numérique (30) et d'utilisation (S5) de cette au moins une grandeur de sortie mesurée à l'étape d'estimation (S2) de la valeur de résistance de charge instantanée ($R_L$).

6. Procédé selon la revendication 5, l'au moins une grandeur de sortie mesurée et utilisée étant la valeur de la tension de sortie ($U_{Aus}$) de la boucle de commande (50) ou de la section (20), la valeur de sortie de régulateur (ReglerAus) du régulateur (30), la valeur de la tension de la rampe de compensation du convertisseur élévateur de crête à crête ($U_{Komp,ss}$), le rapport cyclique (D) du régulateur (30), la valeur de la tension d'entrée ($U_{ein}$) du régulateur (30) et/ou la période ($T_{SW}$) du régulateur (30).

7. Procédé selon l'une des revendications précédentes, la valeur de la fréquence de transit ($f_T$) étant inférieure à cette valeur de fréquence qui peut être associée au zéro de la fonction de transfert du circuit de régulation (50) dans le demi-plan droit d'un diagramme des pôles et des zéros.

8. Convertisseur élévateur comprenant un régulateur numérique (30) qui est conçu pour exécuter les étapes du procédé selon l'une des revendications précédentes.

9. Progiciel comprenant un code de programme exécutable par ordinateur destiné à mettre en œuvre le procédé selon l'une des revendications 1 à 7 lorsque le programme est exécuté sur un dispositif selon la revendication 8.

# Fig. 1
(Stand der Technik)

EP 3 424 138 B1

# Fig. 2

Fig. 3

**Fig. 4**

Fig. 5

## IN DER BESCHREIBUNG AUFGEFÜHRTE DOKUMENTE

### In der Beschreibung aufgeführte Patentdokumente

- US 20140266084 A1
- US 20140009132 A1
- US 2015091544 A1

### In der Beschreibung aufgeführte Nicht-Patentliteratur

- Autotuning Techniques for Digitally-Controlled Point-of-Load Converters with Wide Range of Capacitive Loads. *Applied Power Electronics Conference,* 14-20
- An algebraic parameter estimation approach to the adaptive observer-controller based regulation of the boost converter. **SIRA-RAMIREZ H et al.** INDUSTRIAL ELECTRONICS, 2007. ISIE 2007. IEEE INTERNATIONAL SYMPOSIUM ON. IEEE, 01. Juni 2007, 3367-3372